# EUROPÄISCHE PATENTANMELDUNG

(11) **EP 0 825 092 A2**
(43) Veröffentlichungstag der Anmeldung: **25.02.1998**
(21) Anmeldenummer: 97111809.6
(22) Anmeldetag: 11.07.1997
(51) Int. Cl.: B62D 5/07, B60K 23/02

(54) **Pumpenaggregat**

(30) Priorität: 09.08.1996 DE 19632256
(71) Anmelder: Volkswagen Aktiengesellschaft, 38436 Wolfsburg (DE)
(72) Erfinder: Kruse, Georg, Dipl.-Ing., 38518 Gifhorn (DE); Lutz, Wolf-Rüdiger, Dr.-Ing., 38442 Wolfsburg (DE)

(57) **Zusammenfassung**

Die vorliegende Erfindung betrifft ein Pumpenaggregat und ein Steuerverfahren für einen Hydraulikkreis eines Kraftfahrzeuges mit einem Antriebsaggregat 10 mit einer Servolenkung 14, mit einem automatisierten Schaltgetriebe 18 und mit einer automatisierten Kupplung 56, zum gleichzeitigen Antrieb von Servolenkung und automatisierter Schaltkupplung. Das Antriebsaggregat weist für den Start des Antriebsaggregats 10 zusätzlich eine separat betätigbare Vorrichtung 22 zum Öffnen der automatisierten Schaltkupplung 56 auf.

## Beschreibung

Die Erfindung betrifft ein Pumpenaggregat für einen Hydraulikkreis eines Kraftfahrzeuges mit einem Antriebsaggregat, insbesondere einem Verbrennungsmotor, mit einer Servolenkung, mit einem automatisierten Schaltgetriebe und mit einer automatisierten Kupplung, sowie ein Verfahren zur Steuerung eines Hydraulikkreises eines Kraftfahrzeuges mit einem Antriebsaggregat, insbesondere einem Verbrennungsmotor, mit einer Servolenkung mit Lenkhilfepumpe, mit einem automatisierten Schaltgetriebe und einer automatisierten Kupplung.

Aus der EP 0 458 050 B1 ist ein bedarfsoptimierter hydrostatischer Antrieb von Nebenaggregaten eines Kraftfahrzeuges mit Servolenkung mit einem einzigen Hydrostatmotor bekannt. Die diesen Hydrostatmotor antreibende Druckölversorgungsanlage wird wiederum vom Verbrennungsmotor über einen Triebstrang angetrieben.

Aus der EP 0 164 603 B1 ist eine Hydraulikanlage mit zwei hydrostatischen Pumpen bekannt, die je einen Lenkkreis und einen Arbeitskreis bilden. Die Pumpe des Arbeitskreises versorgt bedarfsweise zusätzlich den Lenkkreis. So kann die Pumpe für den Lenkkreis klein gehalten werden. Alle Pumpen werden zu ihrem Antrieb aus einem Behälter mit einem Druckmittel versorgt, welches nur bei laufendem Motor gefördert wird.

Beide Anordnungen haben den Nachteil, daß sie nicht für ein Kraftfahrzeug mit automatisiertem Getriebe und automatisierter Schaltkupplung geeignet sind, da vor dem Anlassen des Motors keine Kraft zum Öffnen der automatischen Kupplung zur Verfügung steht. Ohne Öffnen der Kupplung ist jedoch im Zustand "Wegrollsperre" (eingelegter Gang und geschlossene Kupplung) ein Anlassen des Verbrennungsmotors nicht möglich.

Aus der DE-A-36 11 361 ist ein hydrostatischer Antrieb von Nebenaggregaten bekannt, wobei jedes Nebenaggregat einen eigenen Hydrostatmotor hat. Hierbei ist nachteilig, daß eine aufwendige Anordnung vieler Hydrostatmotoren notwendig ist, die nur bei laufendem Verbrennungsmotor Leistung abgeben können, was zu entsprechenden Problemen, wie oben geschildert, führt. Lediglich zur bedarfsweisen Unterstützung des hydrostatischen Antriebs der Servolenkung ist eine zweite elektromotorisch betreibbare Pumpe vorgesehen, die jedoch an die Stelle der üblichen Lenkhilfepumpe treten soll und damit entsprechend dimensioniert sein muß und zu einem Kostenmehraufwand führt.

Der vorliegenden Erfindung liegt daher die Aufgabe zugrunde, ein Pumpenaggregat der obengenannten Art zur Verfügung zu stellen, das auch in einem Kraftfahrzeug mit automatisierter Schaltkupplung einsetzbar ist, sowie ein entsprechendes Verfahren zur Steuerung eines Hydraulikkreises vorzuschlagen.

Diese Aufgabe wird erfindungsgemäß durch ein Pumpenaggregat der obengenannten Art mit den kennzeichnenden Merkmalen des Anspruchs 1 und durch eine Verfahren der obengenannten Art mit den Schritten von Anspruch 6 gelöst.

Hierzu ist es erfindungsgemäß vorgesehen, daß das Pumpenaggregat gleichzeitig mit den Hydraulikkreisen von Servolenkung und automatisierter Kupplung verbunden ist und diese antreibt, wobei das Pumpenaggregat eine vom Antriebsaggregat angetriebene mechanische Lenkhilfepumpe und eine Vorrichtung mit separatem Antrieb aufweist. Diese Anordnung hat den Vorteil, daß das Pumpenaggregat wesentlich kleiner, leichter und kostengünstiger ist.

In vorteilhafter Weise ist mit der separat angetriebenen Vorrichtung eine Steuervorrichtung verbunden, welche die Betätigung eines Zündschlosses und/oder eines Türkontaktes sensiert und die separat angetriebene Vorrichtung entsprechend ansteuert. Dies ermöglicht eine einfache und sichere, insbesondere automatisierte Bedienung beim Starten des Antriebsaggregats.

In besonders vorteilhafter Weise wird eine einfache Anordnung dadurch erzielt, daß die separat angetriebene Vorrichtung eine elektrische Pumpe oder eine Kombination aus Druckluftspeicher und Kompressor oder eine Kombination aus Druckluftspeicher und pneumatischer Kolben-Zylinder-Anordnung ist.

Bei einem erfindungsgemäßen Steuerungsverfahren sind zur Erzielung einer einfachen und sicheren Steuerung folgende Schritte vorgesehen:
(a) Betätigen einer vom Antriebsaggregat unabhängig angetriebenen Vorrichtung, die die automatisierte Kupplung unmittelbar vor dem Anschalten bzw. Anlassen des Antriebsaggregats öffnet,
(b) Abschalten der unabhängig angetriebenen Vorrichtung nachdem das Antriebsaggregat läuft, und
(c) Antreiben der Servolenkung und der automatisierten Schaltkupplung im Hydraulikkreis durch die vom Antriebsaggregat angetriebene Lenkhilfepumpe.

Der folgende zusätzliche Schritt vor (a)
(a0) Sensieren der Betätigung eines Zündschlosses und/oder eines Türkontaktes mittels einer Steuervorrichtung und Ausführen der Schritte (a) bis (c), wenn die Steuervorrichtung entsprechende Betätigungen sensiert,
ermöglicht in vorteilhafter Weise eine Automatisierung der Steuerung beim Starten des Antriebsaggregats.

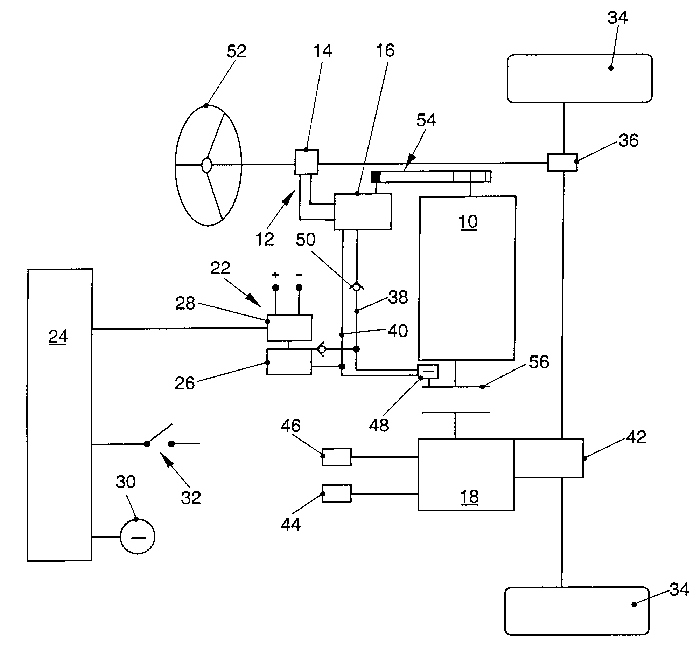

Weitere Merkmale, Vorteile und vorteilhafte Ausgestaltungen der Erfindung ergeben sich aus den abhängigen Ansprüchen sowie aus der nachstehenden Beschreibung der Erfindung an Hand der beigefügten Zeichnung. Diese zeigt ein Blockschaltbild einer bevorzugten Ausführungsform der vorliegenden Erfindung, in der im wesentlichen eine Fahrzeugantriebseinrichtung und eine servounterstützte Fahrzeuglenkeinrichtung 12 schematisch dargestellt ist. Darin ist ein Lenkrad 52 über einen Lenkhilfeservo 14 mit einem Lenkgetriebe 36 verbunden, das eine Lenkbewegung auf Räder 34 umsetzt. Eine Lenkhilfepumpe 16, die hier über einen Zahnriemenantrieb 54 von einem Antriebsaggregat 10 angetrieben wird und über Druckleitungen mit dem Lenkhilfeservo 14 verbunden ist, unterstützt mit Hilfe dieses Lenkhilfeservos 14 die Lenkbewegung.

Die Lenkhilfepumpe 16 betätigt gleichzeitig über Vor- und Rücklaufleitungen 38, 40 und über ein als Kolben-Zylinder-Anordnung ausgebildetes und von einer Steuerungseinrichtung 24 ansteuerbares Stellglied 48 eine automatisierte Kupplung 56, mit der das Antriebsaggregat 10 des Fahrzeuges mit einem Getriebe verbindbar ist. Dieses automatisierte Schaltgetriebe 18 wird über einen Wählaktuator 46 und einen Schaltaktuator 48 betätigt.

In der dargestellten bevorzugten Ausführungsform umfaßt das Pumpenaggregat die Lenkhilfepumpe 16 und eine von einem Elektromotor 28 antreibbare Pumpe 26 mit einem Hydraulikmittelspeicher. Die Lenkhilfepumpe 16 dient gleichzeitig zum Antrieb der Servolenkung und zur Druckmittelversorgung des Stellgliedes 48 für die automatische Kupplung 56.

Vor dem Starten des Antriebsaggregates 10 kann die Lenkhilfepumpe 16 noch nicht die Kupplung 56 betätigen. Befindet sich jedoch die Anordnung im Zustand "Wegrollsperre", so ist ein Gang eingelegt und die Kupplung 56 geschlossen. Würde nunmehr die Zündung und ein Anlasser (nicht dargestellt) für das Antriebsaggregat 10 betätigt, so würde das Antriebsaggregat 10 direkt über Kupplung 56 mit den Rädern 34 verbunden sein. Der Anlasser würde unmittelbar die Räder 34 antreiben.

Dies ist einerseits gefährlich, da das Kraftfahrzeug möglicherweise eine ruckartige Bewegung ausführt, andererseits wird dadurch ein Anspringen des Antriebsaggregats 10 unterbunden. Es ist somit erforderlich, vor dem Starten des Antriebsaggregats 10 die Kupplung 56 zu öffnen. Die Lenkhilfepumpe 16 kann aber wie gesagt mangels Motorleistung die Kupplung 56 nicht öffnen. Daher betätigt das Steuergerät 24 den Elektromotor 28 derart, daß die Pumpe 26 gerade genügend Druck erzeugt, daß sich die Kupplung 56 öffnet. Pumpe 26 und Elektromotor 28 sind nicht für den normalen Betrieb des automatisierten Schaltgetriebes/automatisierte Kupplung 18, 56 ausgelegt. Hier dient die mechanische Lenkhilfepumpe 16 zum Erzeugen ausreichenden Drucks in den Vor- und Rücklaufleitungen 38 und 40.

Der Elektromotor 28 mit Pumpe 26 ist lediglich für kurze Einschaltzeiten (z.B. 2 Sekunden), geringe (Anzahl von) Anläufen (z.B. 10.000 statt 500.000 Anläufe), geringen Druck (z.B. 30 bar) und geringe Fördermengen (z.B. 0,05 Liter/Min.) ausgelegt, so daß diese vergleichsweise kostengünstig sind.

Schließlich ist der Zeichnung entnehmbar, daß die Steuerungsvorrichtung 24 mit einem Zündschloßschalter 30 und einem Türkontaktschalter 32 verbunden ist, mit deren Hilfe der Wunsch des Fahrers nach der Inbetriebnahme des Fahrzeuges sensierbar ist. Wird eine entsprechende Aktivierung der Schalter 30 oder 32 festgestellt, so sendet die Steuerungsvorrichtung 24 ein Ansteuersignal an die separat angetriebene Vorrichtung 22 (z. B. Elektromotor 28 und Pumpe 28) zur Bereitstellung des zum öffnen der Kupplung 56 nötigen Betätigungsdruckes in der Kolben-Zylinder-Anordnung 48.

### BEZUGSZEICHENLISTE

- 10: Antriebsaggregat
- 12: Servolenkung
- 14: Lenkhilfeservo
- 16: Lenkhilfe- und Kupplungsdruckpumpe
- 18: automatisiertes Schaltgetriebe
- 20: automatisierte Kupplung
- 22: Vorrichtung mit separatem Antrieb
- 24: Steuervorrichtung
- 26: Pumpe
- 28: Elektromotor
- 30: Zündschloß
- 32: Türkontakt
- 34: Rad
- 36: Lenkgetriebe
- 38: Vorlaufleitung
- 40: Rücklaufleitung
- 42: Differentialgetriebe
- 44: Schaltaktuator
- 46: Wählaktuator
- 48: Stellglied für Kupplungsbetätigung
- 50: Rückschlagventil
- 52: Lenkrad
- 54: Zahnriemenantrieb
- 56: Kupplung

## Patentansprüche

1. Pumpenaggregat für einen Hydraulikkreis eines Kraftfahrzeuges mit einem Antriebsaggregat (10), mit einer Servolenkung (12), mit einem automatisierten Schaltgetriebe (18) und mit einer automatisierten Kupplung (20), dadurch gekennzeichnet, daß das Pumpenaggregat gleichzeitig mit den Hydraulikkreisen von Servolenkung (12) und automatisierter Kupplung (18) verbunden ist und diese antreibt, wobei das Pumpenaggregat eine vom Antriebsaggregat (10) angetriebene mechanische Lenkhilfepumpe (16) und eine Vorrichtung (22) mit separatem Antrieb aufweist.

2. Pumpenaggregat nach Anspruch 1,
dadurch gekennzeichnet, daß
mit der separat angetriebenen Vorrichtung (22) eine Steuervorrichtung (24) verbunden ist, welche die Betätigung eines Zündschlosses (30) und/oder eines Türkontaktes (32) sensiert und die separat angetriebene Vorrichtung (22) entsprechend ansteuert.

3. Pumpenaggregat nach Anspruch 1 oder 2,
dadurch gekennzeichnet, daß
die separat angetriebene Vorrichtung (22) eine elektrisch angetriebene Pumpe und ein Hydraulikspeicher (26,28) ist.

4. Pumpenaggregat nach Anspruch 1 oder 2,
dadurch gekennzeichnet, daß
die separat angetriebene Vorrichtung (22) eine Kombination aus Druckluftspeicher und Kompressor ist.

5. Pumpenaggregat nach Anspruch 1 oder 2,
dadurch gekennzeichnet, daß
die separat angetriebene Vorrichtung (22) eine Kombination aus Druckluftspeicher und pneumatischer Kolben-Zylinder-Anordnung ist.

6. Verfahren zur Steuerung eines Hydraulikkreises eines Kraftfahrzeuges mit einem Antriebsaggregat, mit einer Servolenkung mit Lenkhilfepumpe, mit einem automatisierten Schaltgetriebe und einer automatisierten Kupplung,
mit folgenden Schritten,
(a) Betätigen einer vom Antriebsaggregat unabhängig angetriebenen Vorrichtung, die die automatisierte Kupplung unmittelbar vor dem Anschalten bzw. Anlassen des Antriebsaggregats öffnet,
(b) Abschalten der unabhängig angetriebenen Vorrichtung nachdem das Antriebsaggregat läuft, und
(c) Antreiben der Servolenkung und der automatisierten Schaltkupplung im Hydraulikkreis durch die vom Antriebsaggregat angetriebene Lenkhilfepumpe.

7. Verfahren nach Anspruch 6,
gekennzeichnet durch folgenden zusätzlichen Schritt vor Schritt (a),
(a0) Sensieren der Betätigung eines Zündschlosskontaktes und/oder eines Türkontaktes mittels einer Steuervorrichtung und Ausführen der Schritte (a) bis (c), wenn die Steuervorrichtung entsprechende Betätigungen sensiert.
